# EUROPÄISCHE PATENTSCHRIFT

(11) **EP 1 867 462 B1**
(45) Veröffentlichungstag und Bekanntmachung des Hinweises auf die Patenterteilung: **19.11.2014**
(21) Anmeldenummer: 07011470.7
(22) Anmeldetag: 12.06.2007
(51) Int. Cl.: B29C 65/08

(54) **Distanzschweissen**
Distance welding
Soudage en distance

(30) Priorität: 13.06.2006 DE 102006027607; 22.12.2006 DE 102006062149
(43) Veröffentlichungstag der Anmeldung: 19.12.2007
(73) Patentinhaber: Faurecia Exteriors GmbH, 31655 Stadthagen (DE)
(72) Erfinder: Albert, Bruno, 90763 Fürth (DE)
(74) Vertreter: Tischner, Oliver

(56) Entgegenhaltungen:
- EP-A2- 1 250 996
- DE-A1- 4 217 727
- DE-A1- 19 950 512
- DE-A1-102004 047 113
- US-A- 3 765 973

## Beschreibung

Die Erfindung betrifft ein Ultraschallschweiß-Füge-Verfahren zum Verschweißen eines ersten Fügepartners mit einem zweiten Fügepartner aus Kunststoff nach dem Oberbegriff des Anspruchs 1.

Als Ultraschallschweiß-Füge-Verfahren für Stoßfänger bzw. deren Innenteile, Anbauteile hat sich das Ultraschall-Schweißen bewährt. Der Fügevorgang wird durch senkrechte Schwingergebilde eingeleitet, die aus Konverter, Transformationsstück (Booster) und Sonotrode bestehen, wobei die Sonotrode das eigentliche Schweißwerkzeug ist. Im Detail ist dies beschrieben in EP 1 250 996 A1.

Dieses Verfahren wird, bedingt durch eine hohe Prozessgeschwindigkeit und die reproduzierbaren Schweißergebnisse, bevorzugt bei der Produktion von Serien-Stoßfängern in großen Stückzahlen eingesetzt.

Beim Ultraschallschweißen werden mechanische Schwingungen unter Druck auf Kunststoffteile übertragen, durch Grenzflächenreibung entsteht Wärme. Unter dem Wärmeeinfluss wird das Material aufgeschmolzen. Die Sonotrode, das mit dem Material in Kontakt befindliche Werkstück, wird parallel unter Druck vorgefahren und presst dabei die Bauteile aufeinander. Nach dem Schweißen ist eine kurze Abkühlphase notwendig, damit der erwärmte Kunststoff abkühlt und sich die Verbindung verfestigt. Die Verbindung zwischen zwei Kunststoffteilen ist hergestellt.

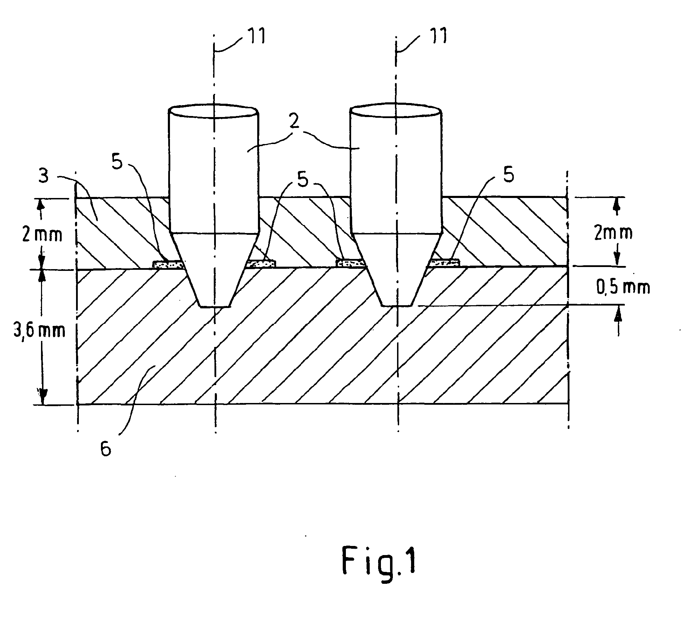

Das Verfahren nach dem Stand der Technik ist weiterhin dadurch gekennzeichnet, dass die zu verschweißenden Formteile flächig aufeinander liegen. Die Sonotrodenspitze dringt durch den Fügepartner hindurch bis in das Sichtteil ein (siehe hierzu Figur 1).

Der verdrängte Kunststoff fließt nach oben und wird durch die Basis-Sonotrode flach gedrückt. Ebenfalls fließt die Schmelze in den Spalt zwischen beide Fügepartner, so dass ringförmig um die Sonotrodenspitze eine Verbindung entsteht. Durch eine elektronische Tiefenabschaltung, die den Schweißweg bis auf 0,05 mm reproduzierbar vorgibt, wird die Sonotrode solange unter Druck gehalten, bis die Schmelze vollständig erstarrt ist.

Ein weiteres Ultraschallschweißverfahren ist aus der US 3 765 973 bekannt.

### Wichtige Parameter bei dieser Verfahrenstechnik sind:

Sonotrodenart / Kunststoffart/ Wanddicke der zu schweißenden Kunststoffe/ Schweißtiefe/ Schweißzeit/ Kühlzeit/ Anpressdruck/ Schmelzpunkt des Kunststoffs etc.

Alle bekannten Ultraschall-Schweißverfahren sind nicht in der Lage, die geforderten Vorgaben des Kunden in Hinblick auf die Festigkeit der Schweißverbindung und den optischen Eindruck der lackierten Oberfläche bei einer Wandstärke ≤ 3,0 mm zu realisieren, die für die Funktion des Stoßfängers an sich genügt. In der Regel wird daher die Wandstärke des Bauteiles im Bereich der Verschweißung erhöht. Während die "normale" Wandstärke des Stoßfängers ca. 2,8 - 3,0 mm beträgt, liegt die Mindestdicke im Bereich der Verschweißung bei ca. 3,4 - 4,0 mm. Dies hat gravierende Auswirkungen auf die Kosten des Werkzeugs und der Herstellung der Bauteile, da beim Kunststoffspritzguss die Zykluszeit durch die maximale Bauteildicke bestimmt wird.

Im Weiteren hat der bisher verwendete herkömmliche Festanschlag der Sonotrode den Nachteil, dass der Sonotrodendruck nur schlecht auf den Schweißpunkt wirkt. Das Material wird durch das Eindringen der Sonotrode aufgeschmolzen und verdrängt, so dass es im Bereich der Verschweißung selbst zu keinem Druckaufbau kommen kann. Das aufgeschmolzene Material wird in der Regel seitlich zwischen die zu verschweißenden Bauteile gedrückt. Hiermit verringert sich die tragfähige verschweißte Fläche durch die Querschnittsfläche der Sonotrode. Zudem wird hierbei das Material im halberstarrten Zustand bewegt, was wiederum die Haftung herabsetzt.

Der Erfindung liegt die Aufgabe zugrunde, ein Ultraschallschweiß-Füge-Verfahren, speziell für ein Sichtbauteil mit einem zu verschweißenden Bauteil vorzuschlagen, mit dem es möglich ist, Sichtbauteile mit einer Dicke im Schweißbereich kleiner gleich 3,0 mm, mit einem hohen Anspruch an die Oberflächenqualität und an die Festigkeit der Schweißverbindung herzustellen. Dies soll ohne sichtbaren Einfall oder Deformation der Oberfläche des Sichtbauteils, in einem serientauglichen Fügeverfahren, umgesetzt werden. Die hierbei zu erreichenden Abzugskräfte müssen im Bereich bis zu 400 N liegen.

Erfindungsgemäß wird die Aufgabe durch das in Anspruch 1 beschriebene Verfahren gelöst. Der geschmolzene Kunststoff, der Schmelzekuchen wird dabei aufgrund des Freivolumens nicht belastet und entsprechend nicht kalt verformt. Ebenfalls wird durch das neue Verfahren die Abzugsfestigkeit der Verbindung verbessert.

Das Freivolumen kann auch durch eine Vertiefung in zumindest einem der Fügepartner geschaffen werden.

Erfindungsgemäß werden im Schweißbereich zwischen den Fügepartnern Distanzhalter vorgesehen. Diese Distanzhalter übertragen den Druck des einen Fügepartners auf den anderen, so dass auch durch diese Distanzhalter die Fügepartner im Schweißbereich aufeinander gepresst werden. Der Raum zwischen den Distanzhaltern bildet dann ein Freivolumen, das zur Aufnahme des geschmolzenen Kunststoffs dient und dadurch der Schweißbereich angenähert kraftfrei bleibt.

Die Distanzhalter bilden ein Netz von Rippen, Rippenabschnitten oder Noppen.

Die Distanzhalter werden als separates Bauteil vor dem Schweißen zwischen die Fügepartner gelegt.

Der durch die Distanzhalter vorgegebene Abstand der Fügepartner voneinander liegt in einer Ausführungsform zwischen 0,1 und 2,0 mm.

Die Dicke der Auflagefläche der Distanzhalter liegt bevorzugt zwischen 0,1 und 2,0 mm.

Zweckmäßigerweise dringt die Sonotrode nur in einen der Fügepartner ein, wodurch sich am anderen Fügepartner keine Abzeichnungen bilden.

Vorteilhafterweise verbleibt nach dem Eintauchen der Sonotrode in den einen Fügepartner eine Restdicke von 0 bis 2/3 d, wobei d die Dicke des Fügepartners im Schweißbereich ist. Bei dieser Restdicke entsteht eine Verbindung mit hohen Abzugskräften und am anderen Fügepartner entstehen keine Abzeichnungen.

In erfindungssgemäßer Ausgestaltung ist ein Fügepartner ein Stoßfänger und damit ein Sichtbauteil und der andere Fügepartner ein Anbauteil oder Innenteil, wobei die Sonotrode nur in das Anbauteil oder Innenteil eintaucht.

Das erfindungsgemäße Verfahren eignet sich zur Anwendung bei Kunststoffteilen.

Mit dem neuen Schweißverfahren sind Einschweißungen von Innenteilen bei Stoßfängern mit einer Wandstärke des Sichtbauteils - Stoßfänger - von kleiner gleich 3,0 mm möglich. Schweißabzeichnungen sind hierbei weder vor, noch nach dem Lackieren am Stoßfänger erkennbar. Ebenfalls geht mit dem neuen Verfahren eine Erhöhung der Festigkeit der Schweißverbindung einher (ca. 200 - 400 N).

Am Beispiel des Ultraschallschweiß-Füge-Verfahrens an einem Stoßfänger wird nachfolgend die Erfindung näher beschrieben.

Vorgehensweise (siehe auch die Figuren):
1.) Die beiden Fügepartner, d.h. das Sichtbauteil (Stoßfänger) und das zu verschweißende Bauteil (Innenteil oder Anbauteil) werden nicht flächig aufeinander gelegt, wie beim Stand der Technik, sondern mit Hilfe von Distanzhaltern, wie Distanzrippen oder Distanznoppen auf einen vordefinierten Abstand gebracht.
2.) Anschließend fährt die Sonotrode in das zu verschweißende Bauteil (Innenteil) ein und verharrt in einer vorgegeben Tiefe und durchstößt es nicht. Hierdurch ist die Verschweißung an der zur Verschweißung abgewandten Seite des Sichtbauteils nicht zu erkennen. Als Folge hiervon schmilzt das Material des zu verschweißenden Bauteils - nachfolgend auch Einschweißteil genannt - an dieser Stelle auf.
3.) Das Material des zu verschweißenden Bauteils fließt dann in das durch die Distanzhalter geschaffene Freivolumen, auch Zwischenraum genannt. Dabei entsteht eine Schweißverbindung zwischen den beiden Fügepartnern.
4.) In der Haltephase, der Kühlphase im Anschluss an die Energieeinbringung durch die Sonotrode, findet die endgültige Verbindung zwischen den zu fügenden Teilen statt. Die Verschweißung wird dabei, mittels der Sonotrode weiterhin unter Druck gehalten. Der Schmelzekuchen wird dabei aufgrund der Distanzhalter nicht belastet und entsprechend nicht kalt verformt. Zusätzlich hierzu wird durch die, bevorzugt nahe der Schweißung liegende, Auflagefläche des Distanzhalters, eine Abzeichnung des Schweißpunktes auf der Sichtseite des Sichtteiles, vermieden. Ebenfalls werden durch das neue Verfahren die Abzugsfestigkeit der Verbindung verbessert.
5.) Anschließend wird, nach der Abkühlphase, die Sonotrode zurückgezogen, d.h. aus dem zu verschweißenden Bauteil herausgezogen.

Weitere wichtige Merkmale :
1. Vorsehen eines Freivolumens an der Stelle der Verschweißung zwischen den Fügepartnern, welches im Laufe des Fügevorgangs zur Aufnahme des aufgeschmolzenen Materials aus dem zu verschweißenden Bauteil dient.
2. Das Verfahren dient bevorzugt dem Verbinden von Automobil-Außenteilen wie Stoßfängern mit Einschweißteilen, z. B. in Form von Versteifungselementen. Als Fügepartner sind vorzusehen ein Fügeteil, auch als zu verschweißendes Bauteil genannt, mit einer Wandstärke von 1,0 - 4,0 mm und ein Sichtbauteil (Stoßfänger), mit einer Wandstärke von 2,5 - 4,0 mm.
3. Die Größe des Freivolumens, welche durch den Abstand zwischen den beiden Fügepartnern bestimmt ist, wird zumindest im Bereich der Schweißstelle abschnittsweise in seiner Höhe durch Zwischenlagen, d.h. Distanzhalter definiert. Vorzugsweise sind die Distanzhalter ein Netz von Rippen, Rippenabschnitte oder Noppen.
4. Das Freivolumen kann konstruktiv an einem der beiden Fügepartner vorgesehen werden. Zum Beispiel können die Distanzhalter an einem der Fügepartner, bevorzugt am zu verschweißenden Bauteil, einstückig angeformt sein.
5. Die Distanzhalter können auch als separates Bauteil vor dem Schweißen zwischen die Fügepartner eingelegt werden. Dies kann z. B. als verlorene Form einer Zwischenlage oder maschinenseitig eingebracht werden.
6. Das Freivolumen kann auch als Vertiefung in einen der beiden Fügepartner eingebracht werden. Zusätzliche Distanzhalter können dann entfallen.
7. Die dem gefüllten Freivolumen benachbarten Segmente, die Distanzhalter dienen zum Halten der definierten Bauteildistanz bzw. des Abstandes zwischen den Fügepartnern. Die Distanzhalter müssen derart gestaltet sein, dass sie den während der Haltephase benötigten Druck zur Bauteilfixierung aufnehmen und auf das Sichtbauteil übertragen können. Der Schweißpunkt selbst soll dadurch möglichst kraftfrei bleiben.
8. Der Abstand der Fügepartner sollte vorzugsweise 0,1 - 2,0 mm betragen. Der Abstand zwischen der Schweißverbindung und dem, das Freivolumen begrenzenden, Distanzhalter sollte bevorzugt gering sein, um die Durchbiegung der Fügepartner zu vermeiden. Aber auch eine direkte Verschweißung auf dem Distanzhalter ist denkbar, insofern Teilsegmente des Distanzhalters zurückbleiben, die die Haltekraft aufnehmen können. Die Breite der Auflagefläche der Distanzhalter sollte vorzugsweise zwischen 0,1 und 2,0 mm betragen.
9. Die Restwanddicke des zu verschweißenden Bauteils, d.h. des Bauteils, in welches die Sonotrode eintaucht, beträgt nach Eintauchen der Sonotrode vorteilhaft 0 - 2/3 d, wobei d die Dicke des zu verschweißenden Bauteils ist. Wesentlich ist, dass die Sonotrode nicht in das Sichtbauteil eindringt.

Nachfolgend wird die Erfindung anhand eines Vergleichs mit dem Stand der Technik und in verschiedenen Figuren näher erläutert.

Figur 1 zeigt ein Schweißverfahren für Kunststoffteile nach dem Stand der Technik.

Ein Sichtbauteil 6 (erster Fügepartner), zum Beispiel ein Stoßfänger, soll mit einem zu verschweißenden Bauteil 3 (zweiter Fügepartner), auch als Fügeteil oder Einschweißteil bezeichnet, verbunden werden. Hierzu werden die Fügepartner 3, 6 flächig aufeinander gelegt. Anschließend fährt eine Sonotrode 2 (offenbart zum Beispiel in der EP 1 250 996 A1) in das Bauteil 3 ein, durchstößt es und ragt bis in das Sichtbauteil 6 ein. Dabei erhitzt sich das Kunststoffmaterial beider Fügepartner im Bereich der Schweißstelle. In der anschließenden Haltephase fließt der Kunststoff nach oben und wird durch die Basis-Sonotrode (in Figur 1 nicht gezeigt) flach gedrückt. Ebenfalls fließt die Schmelze 5 in den Stoß der beiden Fügepartner 3, 6, so dass ringförmig um die Sonotrodenspitze eine Schweißverbindung 5 entsteht. Durch eine elektronische Tiefenabschaltung, die den Schweißweg bis auf 0,05 mm reproduzierbar vorgibt, wird die Sonotrode 2 so lange unter Druck gehalten, bis die Schmelze 5 vollständig erstarrt ist.

Die in der Figur 1 angegebenen Dicken der Fügepartner 3, 6 sind beispielhaft.

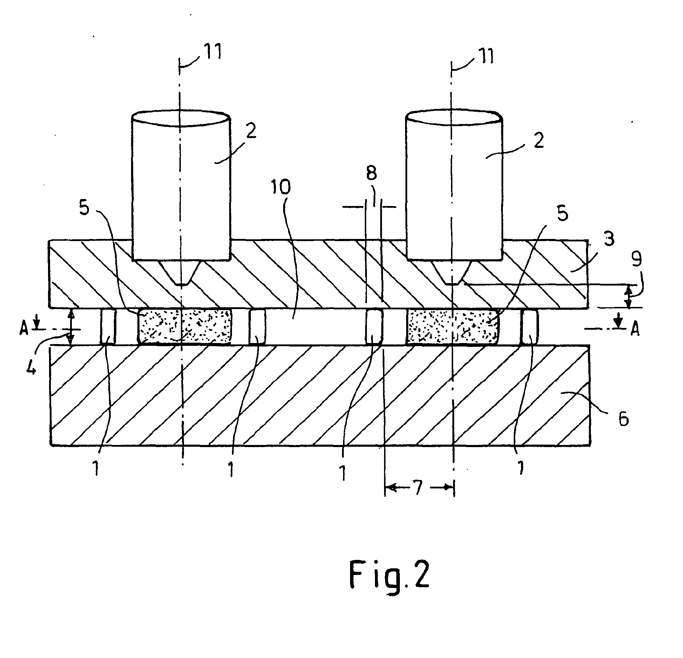

Figur 2 zeigt das erfindungsgemäße Ultraschallschweiß-Füge-Verfahren. Hier werden die Fügepartner 3, 6 nicht flächig, sondern über Distanzhalter 1 aufeinander gelegt. Hierdurch ist ein Freivolumen 10 geschaffen. Beim Schweißvorgang fährt die Sonotrode 2 nur in das zu verschweißenden Bauteil 3 ein, nicht in das Sichtbauteil 6. Das Sichtbauteil 6 ist bevorzugt ein Stoßfänger für Kraftfahrzeuge.

Durch die Energieeinbringung der Sonotrode 2 schmilzt der Kunststoff des zu verschweißenden Bauteils 3 am Ort der Energieeinbringung, wodurch der Kunststoff in das Freivolumen 10 zwischen die Fügepartner 3, 6 eindringt. Die Größe des Freivolumens 10 sollte so gewählt werden, dass sie den geschmolzenen Kunststoff vollständig aufnehmen kann.

Anschließend erfolgt eine Haltephase der Sonotrode 2 bzw. der Sonotrodenspitze im Bauteil 3 bis der Schmelzekuchen bzw. die Schmelze 5 erstarrt ist. Danach wird die Sonotrode 2 herausgezogen. Während des gesamten Schweißvorgangs wirkt auf die Schmelze kein Druck, dieser wird durch die Distanzhalter 1 aufgefangen.

Der Abstand zwischen den Fügepartnern 3, 6, d.h. die Höhe der Distanzhalter 1, ist mit dem Bezugszeichen 4 gekennzeichnet. Mit dem Bezugszeichen 7 ist der Abstand der Mitte der Schmelze 5 zum nächsten Distanzhalter 1, bzw. dessen Rand bezeichnet. Die Mitte der Schmelze 5 ist auch annähernd mit der Rotationsachse 11 der Sonotrode 2 identisch. Mit dem Bezugszeichen 8 ist die Dicke der Distanzhalter 1 gekennzeichnet. Die Restdicke des zu verschmelzenden Bauteils 3 nach dem Eintauchen der Sonotrode 2 ist durch das Bezugszeichen 9 bezeichnet.

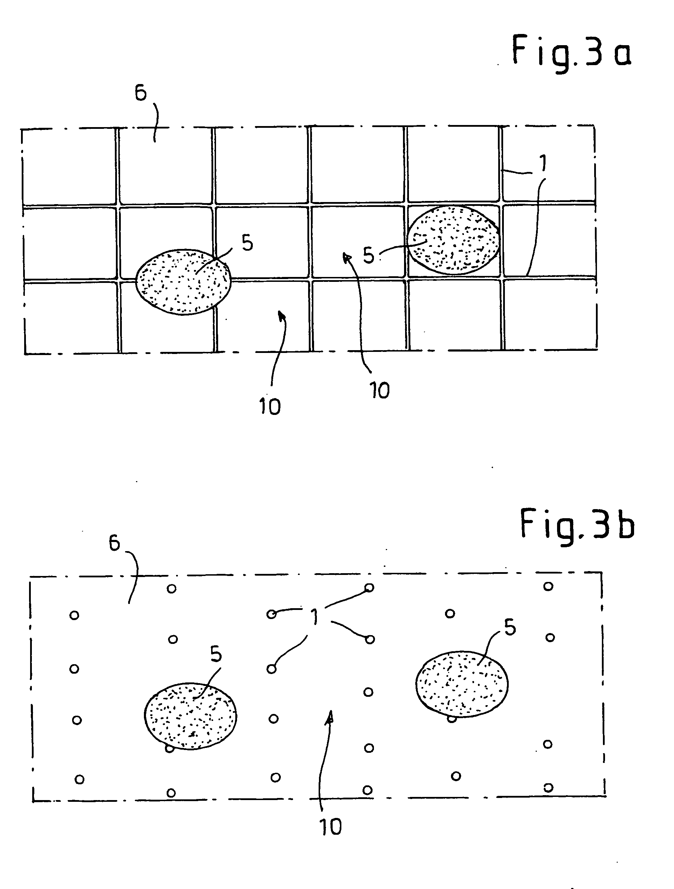

Die Figuren 3a und 3b zeigen einen Schnitt entlang der Linie A-A in Figur 2. In Figur 3a sind die Distanzhalter 1 in Form von Rippen ausgebildet. Mit dem Bezugszeichen 5 ist die Schmelze schematisch dargestellt. In dieser Ausführungsform bilden die Distanzhalter 1 ein Netz sich kreuzender Rippen.

In Figur 3b sind die Distanzhalter 1 in Form von Noppen ausgebildet. Die Art der Noppen kann an die jeweiligen Erfordernisse angepasst werden.

In den Figuren 4a bis 4d ist der Ablauf des erfindungsgemäßen Verfahrens dargestellt.

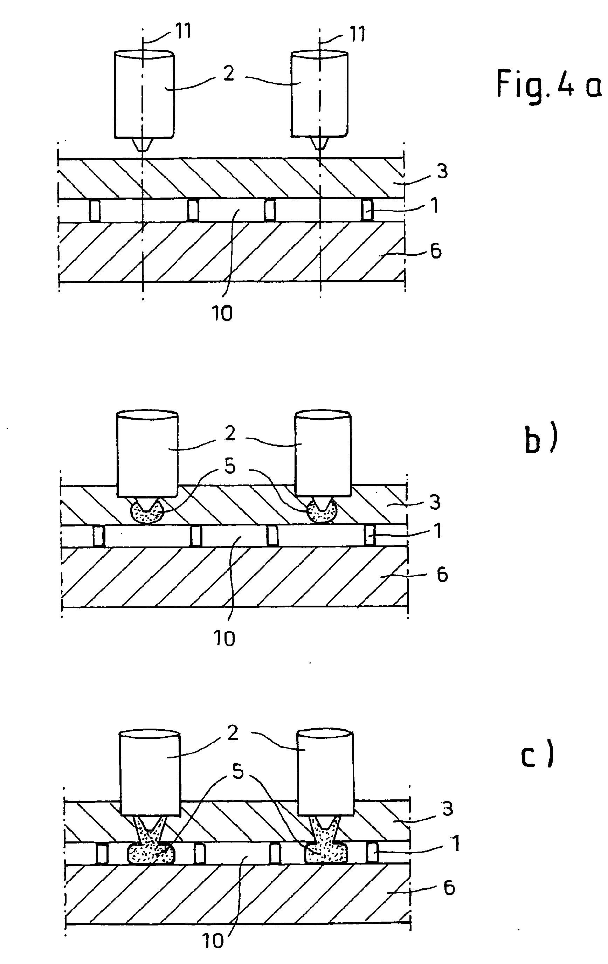

Figur 4a zeigt den Startvorgang. Die Sonotrode 2 befindet sich in Ruhestellung. Die Fügepartner 3, 6 liegen mit Abstand aufeinander, der Abstand wird durch die Distanzhalter 1 gewährleistet.

Die Figur 4b zeigt die Aufschmelzphase des Schweißvorganges. Die Sonotroden 2 sind in das zu verschweißende Bauteil 3 eingetaucht. Der Kunststoff um die Spitze der Sonotrode 2 und die Restwand wird aufgeschmolzen. Es bildet sich eine Schmelze 5 aus.

Die Figur 4c zeigt vom Schweißvorgang die Aufschmelz- und Haltephase. Die Sonotrode 2 verharrt in ihrer Endposition. Das aufgeschmolzene Material bzw. die Schmelze 5 läuft in das Freivolumen 10, bzw. den Zwischenraum der beiden Fügepartner 3, 6 und verbindet sich mit dem Sichtbauteil 6. Während des Abkühlens wird der Fügepartner 3 mittels der Sonotrode 2 unter Druck gehalten.

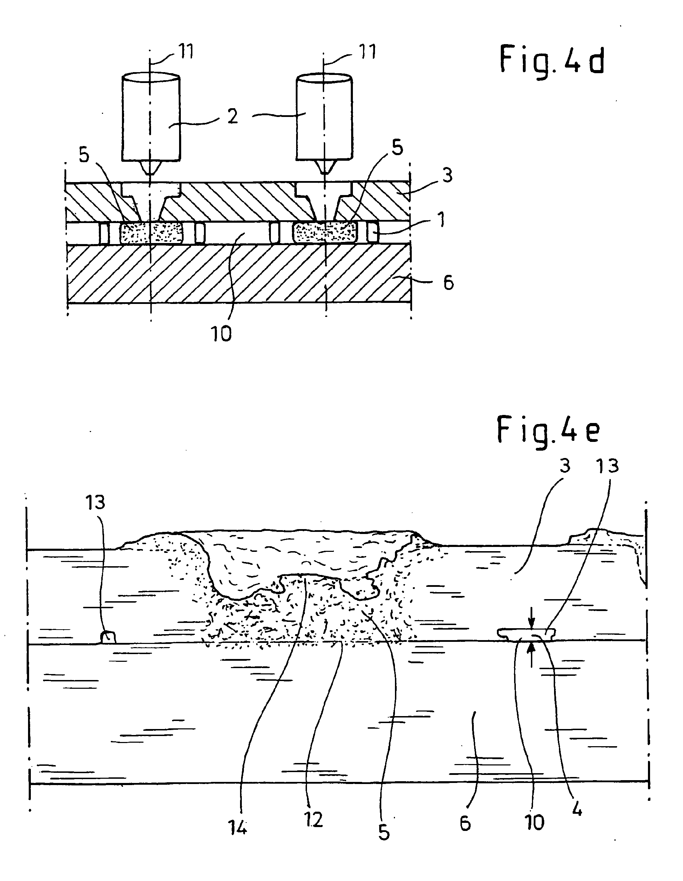

Figur 4d zeigt die Anordnung nach der Verschweißung. Die Sonotrode 2 ist nach der Abkühlphase wieder aus dem Fügepartner 3 herausgezogen worden. Die Fügepartner 3, 6 sind durch die in das Freivolumen 10 geflossene Schmelze 5 verbunden. Angestrebt ist eine stoffschlüssige Verbindung.

Figur 4e zeigt in einer mikroskopischen Aufnahme einen Schnitt der Verbindungsstelle. Der Einstechpunkt der Sonotrode ist durch das Bezugszeichen 14 gekennzeichnet. In weiten Bereichen ist die Verschweißung 12 stoffschlüssig. Der Schmelzekuchen ist durch das Bezugszeichen 5 gekennzeichnet. Das Freivolumen 10 zwischen den Fügepartnern 3, 6 ist an der Stelle 13 nicht mit Schmelze 5 ausgefüllt. Der Abstand 4 zwischen den Fügepartnern 3, 6 ist durch die Höhe der Distanzhalter bestimmt.

## Patentansprüche

1. Ultraschallschweiß-Füge-Verfahren zum Verschweißen eines ersten Fügepartners (6) mit einem zweiten Fügepartner (3) aus Kunststoff, wobei über eine Sonotrode (2) Schwingungsenergie in die Fügepartner (3 ,6) so eingeleitet wird, dass Kunststoff im Schweißbereich schmilzt und nach Abkühlung eine innige Verbindung der Fügepartner (3 ,6) herstellt, wobei in mindestens einem Fügepartner und/oder zwischen den Fügepartnern (3 ,6) im Schweißbereich ein Freivolumen (10) geschaffen wird, welches zur Aufnahme des geschmolzenen Kunststoffs dient und dadurch der Schweißbereich angenähert kraftfrei bleibt, wobei zwischen den Fügepartnern (3, 6) Distanzhalter (1) vorgesehen werden, die Distanzhalter (1) ein Netz von Rippen, Rippenabschnitten oder Noppen bilden und als separates Bauteil vor dem Schweißen zwischen die Fügepartner (3, 6) gelegt werden, **dadurch gekennzeichnet, dass** die Sonotrode (2) nur in einen der Fügepartner (3) eindringt.

2. Ultraschallschweiß-Füge-Verfahren nach Anspruch 1, **dadurch gekennzeichnet, dass** der durch die Distanzhalter (1) vorgegebene Abstand der Fügepartner (3 ,6) voneinander zwischen 0,1 und 2,0 mm liegt.

3. Ultraschallschweiß-Füge-Verfahren nach Anspruch 1 oder 2, **dadurch gekennzeichnet, dass** die Dicke (8) der Auflagefläche der Distanzhalter (1) zwischen 0,1 und 2,0 mm liegt.

4. Ultraschallschweiß-Füge-Verfahren nach einem der Ansprüche 1 bis 3, **dadurch gekennzeichnet, dass** nach dem Eintauchen der Sonotrode (2) in den einen Fügepartner (3) eine Restdicke (9) von 0 bis 2/3 d verbleibt, wobei d die Dicke des Fugepartners (3) im Schweißbereich ist.

5. Ultraschallschweiß-Füge-Verfahren nach einem der Ansprüche 1 bis 4, **dadurch gekennzeichnet, dass** ein Fügepartner (6) ein Stoßfänger und damit ein Sichtbauteil ist und der andere Fügepartner (3) ein Anbauteil oder Innenteil ist, wobei die Sonotrode (2) nur in das Anbauteil oder Innenteil eintaucht.

## Claims

1. An ultrasonic welding-joining-method for the welding of a first joining partner (6) with a second joining partner (3) made of plastic, wherein oscillation energy is introduced via a sonotrode (2) into the joining partners (3, 6) such that plastic in the welding area melts and after cooling produces a close connection of the joining partners (3, 6), wherein in at least one joining partner and/or between the joining partners (3, 6) in the welding area a free volume (10) is created, which serves for the accommodation of the melted plastic and thus the welding area remains approximately force-free, wherein between the joining partners (3, 6) spacers (1) are provided, the spacers (1) form a network of ribs, rib sections or knobs and before the welding are placed as a separate component between the joining partners (3, 6), **characterized in that** the sonotrode (2) only penetrates into one of the joining partners (3).

2. An ultrasonic welding-joining-method according to claim 1, **characterized in that** the distance of the joining partners (3, 6) preset by the spacers (1) is between 0.1 and 2.0 mm from each other.

3. An ultrasonic welding-joining-method according to claim 1 or 2, **characterized in that** the thickness (8) of the supporting surface of the spacers (1) is between 0.1 and 2.0 mm.

4. An ultrasonic welding-joining-method according to any one of claims 1 to 3, **characterized in that** after the immersion of the sonotrode (2) into the one joining partner (3) a residual thickness (9) of 0 to 2/3 d remains, wherein d is the thickness of the joining partner (3) in the welding area.

5. An ultrasonic welding-joining-method according to any one of claims 1 to 4, **characterized in that** one joining partner (6) is a bumper and thus a visible component and the other joining partner (3) is an attachment part or inner part, wherein the sonotrode (2) immerses only into the attachment part or the inner part.

## Revendications

1. Procédé d'assemblage par soudage à ultrasons permettant de souder une première pièce à assembler (6) à une deuxième pièce à assembler (3) en matière plastique, une énergie d'oscillation étant introduite dans les pièces à assembler (3, 6) au moyen d'une sonotrode (2), de telle sorte que la matière plastique fond dans la zone de soudage et forme après le refroidissement un assemblage intime entre les pièces à assembler (3, 6), un dégagement (10) étant créé dans au moins une pièce à assembler et/ou entre les pièces à assembler (3, 6) dans la zone de soudage, lequel est destiné à recevoir la matière plastique fondue et, de ce fait, la zone de soudage reste sensiblement sans force, des écarteurs (1) étant prévus entre les pièces à assembler (3, 6), lesdits écarteurs (1) formant un réseau de nervures, tronçons de nervures ou picots et étant posés en tant que pièces séparées entre les pièces à assembler (3, 6) avant le soudage, **caractérisé en ce que** la sonotrode (2) ne pénètre que dans l'une des pièces à assembler (3).

2. Procédé d'assemblage par soudage à ultrasons selon la revendication 1, **caractérisé en ce que** la distance définie par les écarteurs (1) entre les pièces à assembler (3, 6) se situe entre 0,1 et 2,0 mm.

3. Procédé d'assemblage par soudage à ultrasons selon la revendication 1 ou 2, **caractérisé en ce que** l'épaisseur (8) de la surface de pose des écarteurs (1) se site entre 0,1 et 2,0 mm.

4. Procédé d'assemblage par soudage à ultrasons selon l'une quelconque des revendications 1 à 3, **caractérisé en ce que**, après la pénétration de la sonotrode (2) dans l'une des pièces à assembler (3), il subsiste une épaisseur résiduelle (9) de 0 à 2/3 d, d étant l'épaisseur de la pièce à assembler (3) dans la zone de soudage.

5. Procédé d'assemblage par soudage à ultrasons selon l'une quelconque des revendications 1 à 4, **caractérisé en ce que** l'une des pièces à assembler (6) est un pare-chocs et donc une pièce visible et l'autre pièce à assembler (3) est une pièce rapportée ou une partie intérieure, la sonotrode (2) pénétrant uniquement dans la pièce rapportée ou partie intérieure.
